# EUROPÄISCHE PATENTSCHRIFT

(11) **EP 1 368 121 B1**
(45) Veröffentlichungstag und Bekanntmachung des Hinweises auf die Patenterteilung: **27.06.2007**
(21) Anmeldenummer: 02702411.6
(22) Anmeldetag: 16.03.2002
(51) Int. Cl.: B01L 3/00, G01N 1/00, G01N 1/31

(54) **UNTERSUCHUNGSVORRICHTUNG ZUM UNTERSUCHEN CHEMISCHER UND/ODER BIOLOGISCHER PROBEN**
ANALYSING DEVICE FOR ANALYSING CHEMICAL AND/OR BIOLOGICAL SAMPLES
DISPOSITIF D'ANALYSE POUR ANALYSER DES ECHANTILLONS CHIMIQUES ET/OU BIOLOGIQUES

(30) Priorität: 16.03.2001 DE 10112545
(43) Veröffentlichungstag der Anmeldung: 10.12.2003
(73) Patentinhaber: Miltenyi Biotec GmbH, 51429 Bergisch Gladbach (DE)
(72) Erfinder: BOSIO, Andreas, 50931 Köln (DE)
(74) Vertreter: von Kirschbaum, Alexander
(86) Internationale Anmeldenummer: PCT/EP2002/002950
(87) Internationale Veröffentlichungsnummer: WO 2002/074439

(56) Entgegenhaltungen:
- EP-A- 0 611 598
- DE-C- 19 516 468
- US-A- 4 847 208
- US-A- 5 100 626

## Beschreibung

Die Erfindung betrifft eine Untersuchungsvorrichtung zum Untersuchen chemischer und/oder biologischer Proben. Die Untersuchungsvorrichtung weist ein Basisteil, wie beispielsweise einen Objektträger oder einen anderen Probenträger, auf. Ferner ist ein Deckel vorgesehen, so dass durch das Basisteil und den Deckel eine Probenkammer ausgebildet ist.

Mit derartigen Untersuchungsvorrichtungen werden beispielsweise Gewebeproben mit Hilfe eines Hybridisierungsverfahrens untersucht. Hierbei werden beispielsweise DNA-Stücke, d.h. Gen-Fragmente, auf der Oberfläche eines Objektträgers aufgebracht. Das Aufbringen der DNA-Stücke erfolgt durch Auftropfen mit Hilfe eines Roboters. Die Position der einzelnen DNA-Stücke auf dem Objektträger ist somit bekannt. Die DNA-Stücke verbinden sich mit der Oberfläche des Objektträgers und haften auf dieser, so dass sich ihre Position im anschließenden Untersuchungsprozess nicht verändert.

Im nächsten Schritt wird RNA beispielsweise aus einem zu untersuchenden Tumor entnommen. Mit Hilfe von Enzymen wird die RNA in DNA umgewandelt und anschließend mit geeigneten Markern, insbesondere fluoreszierenden Farbmarkern, markiert.

Zusätzlich wird eine Vergleichsprobe mit gesundem Gewebe erzeugt. Die gesunde DNA wird ebenfalls mit einem geeigneten Marker markiert. Bei dem Marker handelt es sich vorzugsweise um einen Fluoreszenzmarker anderer Farbe, so dass das gesunde Gewebe mit einem grün fluoreszierenden Marker und das beispielsweise dem Tumor entnommene, zu untersuchende Gewebe mit einem roten Farbmarker markiert ist.

Anschließend werden beide Proben auf den gesamten Objektträger aufgetragen. Die in den beiden Proben enthaltenen DNA-Stränge verbinden sich fest mit den Gegenstücken, d.h. den auf der Oberfläche des Objektträgers befindlichen DNA-Stücken. Das Verbinden der in den Proben enthaltenen DNA mit den am Objektträger haftenden DNA-Stücken erfolgt in einem Hybridisierungsprozess. Anschließend wird der Objektträger gewaschen, so dass nur noch fest haftende DNA-Stücke und angekettete DNA aus den beiden Proben auf dem Objektträger vorhanden sind.

Nach dem Trocknen des Objektträgers wird dieser einem Detektierprozess zugeführt. Hierin werden die einzelnen Positionen des Objektträgers, an denen DNA-Stücke haften, mit einem geeigneten Mikroskop untersucht. Hierbei werden die einzelnen DNA-Stücke beispielsweise mit Laserlicht angeregt, so dass die Fluoreszenzmarker in der entsprechenden Farbe fluoreszieren. Erscheint eine bestimmte Position, an der ein DNA-Stück haftet, beispielsweise als roter Spot, kann hieraus geschlossen werden, dass dieses Gen in dem Tumor-Gewebe, nicht jedoch in dem gesunden Gewebe, aktiv war. Fluoresziert ein Spot grün, kann daraus geschlossen werden, dass dieses Gen nur in dem gesunden Gewebe aktiv war. Bei Auftreten von gelber Fluoreszenz war das entsprechende Gen in beiden Geweben aktiv. Durch vorstehendes Verfahren lässt sich diagnostizieren, welche Gene beispielsweise in einem Tumor aktiv sind. Hieraus lassen sich Rückschlüsse auf die Art der Gewebeveränderung u.dgl. ziehen.

Um ein möglichst gutes Verbinden der beiden Proben mit den auf den Objektträgern befindlichen DNA-Stücken zu realisieren, ist es bekannt, den Objektträger beispielsweise mit einem Deckel zu verschließen, so dass zwischen dem Objektträger und dem Deckel eine Probenkammer gebildet ist. Die Probenkammer wird sodann durch eine Vibrationseinrichtung in Vibrationen versetzt, um ein Bewegen der beiden Proben zu bewirken. Durch diese Bewegung finden die entsprechenden Probenbestandteile leichter die geeigneten Gegenstücke, mit denen sie sich sodann verbinden. Das Vorsehen einer Vibrationsvorrichtung hat den Nachteil, dass hierbei stehende Wellen entstehen und somit nur eine begrenzte Bewegung der Proben stattfindet.

Die in dem vorstehenden Beispiel beschriebenen Probleme bestehen auch bei anderen Untersuchungen von chemischen und/oder biologischen Proben, bei denen beispielsweise eine Probe an einem Basisteil, wie einem Objektträger, fest haftet und eine andere Probe mit dieser reagieren soll insbesondere beim Verwenden von Objektträgern aus Glas als Basisteil besteht die Gefahr, dass diese beim Aufsetzen des Deckels oder bei sonstigem Handhaben beschädigt werden.

Aus US 4,847,208 ist ein dreistückiges Probenkammergehäuse bekannt. Dieses weist einen Boden, ein Mittelteil und eine Klappe auf. Die Klappe ist über Scharniere schwenkbar gehalten. Mit Hilfe einer Dichtung wird das Mittelteil unabhängig von der Lage des Bodens, auf den Boden gepresst. Hierdurch ist eine dicht Probenkammer ausgebildet.

Ferner ist in US 5,100,626 eine Untersuchungsvorrichtung mit zweistückiger Probenkammer beschrieben. Die Probenkammer weist ein Kopfteil und ein Basisteil auf. Das Probenkammergehäuse liegt auf einem Fußteil auf, wobei das Kopfteil und die Basis von Hand auf das Fußteil gelegt werden. Durch Verschrauben einer Unterplatte mit einer Oberplatte erfolgt ein Zusammenpressen der Bauteile.

Aufgabe der Erfindung ist es, eine Untersuchungsvorrichtung zum Untersuchen chemischer und/oder biologischer Proben zu schaffen, bei der die Gefahr der Beschädigung des Basisteils, insbesondere eines als Basisteil dienenden Objektträgers, verringert ist.

Die Lösung der Aufgabe erfolgt durch eine Untersuchungsvorrichtung gemäß Patentanspruch 1.

Die erfindungsgemäße Untersuchungsvorrichtung weist ein Basisteil und einen Kopfteil bzw. Deckel auf. Durch das Basisteil und das Kopfteil ist eine Probenkammer ausgebildet. Bei dem Basisteil kann es sich um einen beispielsweise flachen Objektträger aus dünnem Glas handeln. Ebenso kann der Objektträger oder ein anderer Probenträger auf das Basisteil gelegt werden, so dass der Probenträger innerhalb der Probenkammer angeordnet ist.

Erfindungsgemäß weist die Untersuchungsvorrichtung ein Fußteil zur Aufnahme des Basisteils auf. Das Fußteil ist derart ausgebildet, dass das Fußteil und das Kopfteil relativ zueinander bewegbar sind. Hierdurch erfolgt ein Verschließen der Probenkammer. Ferner ist das Kopfteil und/oder das Fußteil erfindungsgemäß derart gelagert, dass sich beim Verschließen der Probenkammer das Basisteil relativ zum Deckel ausrichten kann. Das Basisteil liegt somit an sämtlichen Aufnahmepunkten des Kopfteils, beispielsweise einer umlaufenden Dichtung, vollständig an, bevor das Basisteil gegen das Kopfteil bzw. den Deckel gedrückt wird, um eine vorzugsweise dicht abschließende Probenkammer zu schaffen. Das Basisteil ist somit, zumindest in gewissen Grenzen, frei beweglich, so dass beim Verschließen der Probenkammer vermieden ist, dass Spannungen in dem Basisteil auftreten. Hierdurch ist die Gefahr von Beschädigungen des Basisteils, bei dem es sich insbesondere um einen flachen Objektträger aus dünnem Glas handelt, erheblich verringert.

Das Basisteil ist vorzugsweise flach. Ebenso ist der Bereich des Kopfteils, der dem Basisteil gegen angeordnet ist, flach. Die Lagerung des Fußteils und/oder des Kopfteils ist vorzugsweise derart ausgebildet, dass beim Verschließen der Probenkammer sich das Kopfteil und das Basisteil planparallel zueinander ausrichten.

Handelt es sich beispielsweise um ein Fußteil, in der das Basisteil horizontal gehalten wird, so ermöglicht beispielsweise die Lagerung des Fußteils zumindest eine begrenzte Beweglichkeit des Basisteils um eine horizontale Achse. Vorzugsweise besteht eine begrenzte Bewegungsmöglichkeit um beide horizontalen Achsen. Bei einem Kopfteil mit einer vorzugsweise umlaufenden Dichtung ist somit gewährleistet, dass beim Verschließen der Probenkammer das Basisteil plan an der Dichtung anliegt. Somit werden von der Dichtung keine punktuellen Kräfte auf das Basisteil, sondern nur flächige Kräfte auf das Basisteil übertragen. Hierdurch ist ein Beschädigen des Basisteils beim Verschließen der Probenkammer vermieden.

Ein ggf. zusätzlich oder anstatt des Fußteils gelagert ausgebildetes Kopfteil ist vorzugsweise ebenfalls derart ausgebildet, dass es um eine, vorzugsweise beide Längsachsen schwenkbar ist. Bei den Längsachsen handelt es sich um die beiden horizontalen Achsen, wenn das Basisteil horizontal angeordnet ist.

Bei einer besonders bevorzugten Ausführungsform ist das Kopfteil und/oder das Fußteil schwimmend gelagert. Dies kann beispielsweise durch elastische Aufnahmen, Zwischenteil o.dgl. realisiert werden. Vorzugsweise sind zur schwimmenden Lagerung des Kopfteils und/oder des Fußteils elastische Elemente, wie beispielsweise elastische Stifte, vorgesehen. Besonders bevorzugt ist es, als elastische Elemente Federn vorzusehen. Vorzugsweise sind mindestens drei elastische Elemente und besonders bevorzugt mindestens vier elastische Elemente je Kopf- und/oder je Fußteil vorgesehen. Durch die erfindungsgemäße schwimmende Lagerung des Kopfteils und/oder des Fußteils werden die beim Verschließen der Probenkammer auftretenden Kräfte vergleichmäßigt, so dass keine punktuell wesentlich höheren Kräfte auftreten, durch die ein Beschädigen oder Zerstören des Basisteils hervorgerufen werden kann.

Bei einer weiteren besonders bevorzugten Ausführungsform ist das Fußteil und/oder das Kopfteil mittels einer Ein-Punkt-Lagerung gelagert. Diese ist beispielsweise als Kugelgelenk ausgebildet und vorzugsweise, bezogen auf das Basisteil, zentral angeordnet. Somit ist eine Bewegung des Fußteils und/oder des Kopfteils, wie vorstehend beschrieben, auf einfache Weise ermöglicht. Bei der Ein-Punkt-Lagerung handelt es sich vorzugsweise um eine sphärische Lagerung in Form eines Kugelgelenks o.dgl.

Ferner ist es möglich, das Basisteil schwimmend zu lagern. Unterhalb des Basisteils ist hierzu beispielsweise ein verformbarer, vorzugsweise elastisch verformbarer, Körper vorgesehen. Vorzugsweise handelt es sich um einen quaderförmigen elastischen Körper, auf dem das Basisteil, beispielsweise ein Objektträger, aufliegt. Die schwimmende Lagerung des Basisteils kann zusätzlich zu der vorstehend beschriebenen Lagerung des Fußteils vorgesehen sein.

Vorzugsweise weist die erfindungsgemäße Vorrichtung eine Bewegungseinrichtung zum Bewegen der Probe in der Probenkammer auf. Als Bewegungseinrichtung weist die Untersuchungsvorrichtung erfindungsgemäß eine Fördereinrichtung auf. Mit Hilfe der Fördereinrichtung wird zumindest ein Teil der Probe aus der Probenkammer abgesaugt und anschließend der Probenkammer wieder zugeführt. Ebenso kann ein Umwälzen der Probe durchgeführt werden, wobei die Probe sodann zumindest teilweise "im Kreis" bewegt wird.

Durch das erfindungsgemäße Vorsehen einer Fördereinrichtung als Bewegungseinrichtung der Probe ist das Auftreten stehender Wellen vermieden. Durch das Absaugen und Zuführen eines Teils der Probe ist gewährleistet, dass die gesamte in der Probenkammer vorhandene Probenmenge bewegt wird.

Dies kann in Abhängigkeit der Größe der Probenkammer beispielsweise dadurch sichergestellt werden, dass eine ausreichende Menge an Probe abgesaugt und anschließend der Probenkammer wieder zugeführt wird. Vorzugsweise ist daher zwischen der Fördereinrichtung, bei der es sich beispielsweise um eine Pumpe handelt, und der Probenkammer eine Aufnahmekammer zur Aufnahme und anschließenden Abgabe eines Teils der Probe vorgesehen. Durch eine entsprechende Dimensionierung der Aufnahmekammer kann beispielsweise auch ein Großteil der in der Probenkammer befindlichen Probe abgesaugt und anschließend der Probenkammer wieder zugeführt werden. Anstelle einer gesonderten Aufnahmekammer kann auch ein zwischen der Fördereinrichtung und der Probenkammer befindlicher Kanal entsprechend dimensioniert sein und als Aufnahmekammer dienen.

Bei einer besonders bevorzugten Ausführungsform sind mindestens zwei Aufnahmekammern vorgesehen. Diese sind mit einer oder zwei Fördereinrichtungen derart verbunden, dass abwechselnd ein Teil der Probe von den Probenkammern aufgenommen und abgegeben wird. Beispielsweise kann während aus der einen Aufnahmekammer Probe abgegeben wird, gleichzeitig in der anderen Probenkammer Probe aufgenommen werden. Hierdurch ist eine gleichförmige Bewegung der Probe in der Probenkammer verwirklicht. Zwischen der Abgabe der Probe aus der einen Aufnahmekammer und der Aufnahme von Probe in die andere Aufnahmekammer kann auch ein zeitlicher Abstand liegen. Ferner können sich die beiden Prozesse überschneiden.

Zur Verbesserung der Bewegung der Probe in der Probenkammer können mehrere Kanäle, vorzugsweise im Kopfteil, angeordnet sein, durch die die Probe an unterschiedlichen Stellen der Probenkammer entnommen und dieser wieder zugeführt wird. Die Entnahmestelle kann sich ggf. auch von der Zuführstelle unterscheiden, so dass ein Fördern der Probe "im Kreis" stattfindet.

Die Probenkammer ist vorzugsweise durch eine entsprechende Ausgestaltung des Kopfteils, wie einen umlaufenden rahmenförmigen am Kopfteil vorgesehenen Ansatz, ausgebildet. Dies hat den Vorteil, dass als Basisteil ein herkömmlicher Objektträger, beispielsweise eine flache Glasplatte, verwendet werden kann. Der an dem Kopfteil vorgesehene rahmenförmige Ansatz weist vorzugsweise eine umlaufende Dichtung auf, so dass die Probenkammer nach außen abgedichtet ist und keine Probenflüssigkeit zwischen dem Kopfteil und dem Basisteil entweichen kann.

Bei einer weiteren bevorzugten Ausführungsform ist die Probenkammer durch ein rahmenförmiges Zwischenteil gebildet. Dieses ist vorzugsweise nicht fest mit dem Kopfteil verbunden, sondern entweder nur zwischen das Kopfteil und das Fußteil gelegt oder lösbar mit dem Kopfteil oder dem Fußteil verbunden. Dies hat den Vorteil, dass das Zwischenteil auf einfache Weise entfernt und gereinigt werden kann.

Zur Ausbildung einer äußerst kleinen Probenkammer weist das Kopfteil einen Ansatz auf, der zum Ausbilden der Probenkammer teilweise in die Ausnehmung des Zwischenteils ragt. Das Zwischenteil ist hierbei geringfügig dicker als die Höhe des mit dem Kopfteil verbundenen Ansatzes. Der hierdurch ausgebildete Spalt entspricht der Probenkammer. Da als Basisteil vorzugsweise Objektträger vorgesehen werden, ist die Ausnehmung in dem Zwischenteil vorzugsweise rechteckig und der Ansatz an dem Kopfteil vorzugsweise quaderförmig. Vorzugsweise weist die Probenkammer ein Volumen von weniger als 100 µl, insbesondere weniger als 80 µl und besonders bevorzugt weniger als 60 µl auf.

Vorzugsweise ist zwischen dem an dem Kopfteil vorgesehenen Ansatz und dem Zwischenteil eine Dichtung angeordnet, so dass eine dichte Probenkammer ausgebildet werden kann. Die Dichtung ist vorzugsweise mit dem Zwischenteil verbunden, so dass die Dichtung auf einfache Weise gereinigt werden kann. Ferner ist es einfacher, bei einer beschädigten Dichtung das Zwischenteil auszuwechseln als eine am Ansatz des Kopfteils vorgesehene Dichtung zu ersetzen.

Bei einer besonders bevorzugten Ausführungsform ist eine Aufnahmevorrichtung für mehrere Objektträger bzw. Basisteile vorgesehen. Die Aufnahmevorrichtung weist ein Bodenteil und mit dem Bodenteil verbundene Zentrierelemente auf. Durch die Zentrierelemente sind mehrere Aufnahmebereiche zur Aufnahme jeweils eines Objektträgers ausgebildet. Auf den Bodenteil kann je Aufnahmebereich somit ein Objektträger gelegt werden. Der Objektträger dient sodann als Basisteil und bildet zusammen mit einem Kopfteil eine Probenkammer. Hierzu kann je Aufnahmebereich ein gesondertes Kopfteil und/oder Fußteil vorgesehen sein. Ebenso ist es möglich, für mehrere Aufnahmebereiche ein gemeinsames, entsprechend geformtes Kopfteil oder Fußteil vorzusehen.

Bei dieser Ausführungsform ist es wesentlich für die Erfindung, dass je Basisteil zumindest das Fußteil oder das Kopfteil beweglich gelagert ist. Es ist somit möglich, ein gemeinsames Fußteil für mehrere Basisteile vorzusehen und ein gesondertes Kopfteil für jedes Basisteil vorzusehen. Ferner ist dies umgekehrt möglich, so dass ein gemeinsames Kopfteil und gesonderte Fußteile vorgesehen sind. Die gesondert vorgesehenen Kopfteile oder Fußteile, die beweglich gelagert sind, sind vorzugsweise an einem Trägerteil beweglich gehalten. Es ist somit möglich, auch die beweglich gehaltenen Teile gemeinsam, beispielsweise in einer vertikalen Richtung zum Öffnen oder Schließen der Probenkammer, zu bewegen. Vorzugsweise erfolgt die Bewegung jedoch durch das gemeinsame Fußteil oder gemeinsame Kopfteil.

In die Aufnahmebereiche der Aufnahmevorrichtung kann somit jeweils ein Objektträger, auf dem beispielsweise bereits an vorgegebenen Positionen DNA-Stücke haften, eingelegt werden. Die mehrere Objektträger tragende Aufnahmevorrichtung kann sodann auf einfache Weise, beispielsweise mit Hilfe von Robotergreifarmen o.dgl., gehandhabt werden. Da die Aufnahmevorrichtung beispielsweise an den Zentrierelementen oder an dem Bodenteil leicht gefasst werden kann, ist ein Handling der Objektträger auf einfache Weise möglich. Insbesondere ist durch die erfindungsgemäße Vorrichtung sichergestellt, dass Objektträger aus dünnem Glas beim Handling nicht beschädigt werden. Auch das Berühren der bereits auf Objektträgern befindlichen Proben ist vermieden.

Vorzugsweise sind die Zentrierelemente wie einstückige Rahmenteile ausgebildet. Somit ist jeder Objektträger von einem Rahmen umgeben. Dies hat den Vorteil, dass der Objektträger geschützt in dem Aufnahmebereich angeordnet ist. Das Rahmenteil weist vorzugsweise eine Höhe auf, die höher als die Dicke des Objektträgers ist, so dass der Objektträger vollständig innerhalb des Rahmenteils aufgenommen ist. Hierdurch ist eine Beschädigung des Objektträgers beim Handling der Aufnahmevorrichtung sowie ein Berühren der Oberfläche des Objektträgers vermieden. Vorzugsweise sind durch ein einziges Rahmenteil mehrere Aufnahmebereiche ausgebildet. Hierbei ist jeder Aufnahmebereich von einem Rahmen vollständig umgeben. Eine zwischen zwei benachbarten Objektträgern vorgesehene Wand des Rahmenteils dient somit als Teil des Rahmens zweier Aufnahmebereiche.

Die vorstehend beschriebenen Rahmenteile können jeweils einen Aufnahmebereich, vorzugsweise vollständig als umlaufender Zentrierrahmen, umgeben. Es kann sich aber auch um einzelne Rahmenteile handeln, die die Aufnahmebereiche nicht umgeben, sondern beispielsweise nur zur Aufnahme von Ecken des Objektträgers dienen, um diesen in der Aufnahmevorrichtung zu zentrieren. Hierbei ist ggf. das Einlegen der Objektträger in die Aufnahmevorrichtung erleichtert. Zur Erleichterung des Einlegens der Objektträger in die Aufnahmevorrichtung können die Zentrierelemente ferner angefast sein. Die Anfasung ist derart ausgebildet, dass der Aufnahmebereich, in dem jeweils ein Objektträger aufgenommen wird, nach oben hin erweitert ist, um das Einlegen eines Objektträgers zu erleichtern.

Bei einer besonders bevorzugten Ausführungsform weist das Bodenteil zumindest in den Aufnahmebereichen flexibles Material auf. Insbesondere besteht der gesamte Bodenteil aus einem durchgehenden flexiblen Material. Die flexible Membran dient somit als schwimmende Lagerung des Basisteils, wie beispielsweise des Objektträgers. Hierdurch ist die Gefahr der Beschädigung des Basisteils beim Verschließen der Probenkammer erheblich verringert.

Insbesondere handelt es sich bei dem flexiblem Material um eine wärmedurchlässige Membran. Es ist hierdurch auf besonders vorteilhafte Weise möglich, unterhalb der einzelnen Aufnahmebereiche eine Temperiereinrichtung, wie beispielsweise ein Peltie-Element, vorzusehen, um einzelne Objektträger zu erwärmen. Mit Hilfe der Temperiereinrichtung ist ein sehr gezieltes Erwärmen ggf. auch nur einzelner Teilbereiche eines Objektträgers möglich, ohne den Objektträger unmittelbar handhaben zu müssen. Eine Beschädigung des Objektträgers ist hierbei wiederum vermieden. Die Membran ist vorzugsweise derart ausgelegt, dass Temperaturen von 4 °C bis 100 °C auf den Objektträger übertragen werden können. Die Temperiereinrichtung kann auch unabhängig von dem Vorsehen einer flexiblen Membran an bzw. in dem Kopfteil und/oder dem Fußteil vorgesehen sein.

Ferner können an dem Kopfteil und/oder des Fußteils Kühlelemente sowie Kühlrippen vorgesehen sein. Hierdurch kann die in der Probenkammer herrschende Temperatur genau eingestellt werden.

Des weiteren ist vorzugsweise eine Positioniereinrichtung zum Positionieren der Aufnahmevorrichtung bzgl. des Fußteils vorgesehen. Beispielsweise kann für jedes in der Aufnahmevorrichtung vorgesehene Basisteil ein gesondertes Fußteil vorgesehen sein. Mit Hilfe der Positioniereinrichtung kann das Fußteil relativ zu den in der Aufnahmevorrichtung angeordneten Basisteilen, wie Objektträgern, ausgerichtet werden. Die Positioniereinrichtung kann derart ausgebildet sein, dass jedes Fußteil gesondert gegenüber den Basisteilen ausrichtbar ist. Vorzugsweise werden die einzelnen für die Basisteile vorgesehenen Fußteile gemeinsam mit der Positioniereinrichtung ausgerichtet.

Hierzu weist die Positioniereinrichtung vorzugsweise ein Greifelement auf, um die Aufnahmevorrichtung zu halten. Insbesondere kann es sich bei der Positioniereinrichtung um eine schubladenartige Positioniereinrichtung handeln, in die die Aufnahmevorrichtung einlegbar ist. Die schubladenartige Positioniereinrichtung kann aus einer Untersuchungsvorrichtung heraus- und hineintransportiert werden. Die Schublade ist derart ausgebildet, dass sie gleichzeitig als Positioniereinrichtung dient und somit die Lage zwischen dem oder den Fußteilen und den einzelnen Basisteilen festlegt.

Um die erfindungsgemäße Aufnahmevorrichtung insbesondere in bestehenden Anlagen einsetzen zu können, entsprechen die Außenabmessungen der Aufnahmevorrichtung Standardabmessungen von Mikrotiterplatten. Insbesondere weist die Aufnahmevorrichtung eine Breite von 96 ± 4 mm und eine Länge von 128 ± 4 mm auf.

Mit Hilfe der vorstehend beschriebenen Untersuchungsvorrichtung können beispielsweise Hybridisierungsuntersuchungen von DNA-Fragmenten durchgeführt werden. Ferner sind Untersuchungen von chemischen und/oder biologischen Proben möglich, welche eine nachweisbare Affinität zueinander aufweisen, wobei es sich insbesondere um Untersuchungen von Antigen-Antikörper-Affinität handeln kann.

Nachfolgend wird die Erfindung anhand einer bevorzugten Ausführungsform unter Bezugnahme auf die anliegenden Zeichnungen näher erläutert. Es zeigen:
- Fig. 1: eine schematische Draufsicht einer ersten bevorzugten Ausführungsform der Aufnahmevorrichtung mit mehrere eingelegten Basisteilen,
- Fig. 2: eine schematische Teil-Schnittansicht entlang der Linie II-II in Fig. 1, wobei zusätzlich das in Fig. 1 nicht dargestellte Kopfteil sowie das erfindungsgemäße Fußteil dargestellt ist,
- Fig. 3: eine der Fig. 2 entsprechende schematische Teil-Schnittansicht einer zweiten bevorzugten Ausführungsform der erfindungsgemäßen Vorrichtung,
- Fig. 4: eine schematische Draufsicht einer zweiten bevorzugten Ausführungsform einer in der in Fig. 3 dargestellten Vorrichtung eingesetzten Aufnahmevorrichtung für Basisteile,
- Fig. 5: eine schematische Draufsicht eines bei der in Fig. 3 dargestellten Ausführungsform verwendeten Zwischenteils,
- Fig. 6: ein einzelnes in die in Fig. 1 dargestellte Aufnahmevorrichtung einlegbares Basisteil und
- Fig. 7: eine schematische perspektivische Ansicht einer Untersuchungsvorrichtung, in die die Aufnahmevorrichtung einlegbar ist.

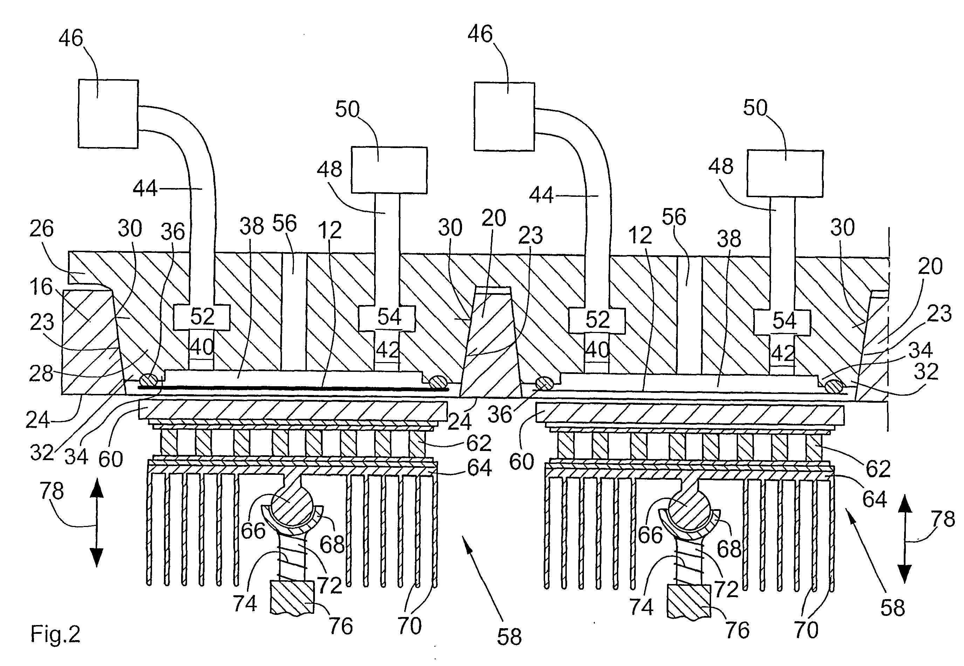

Eine Aufnahmevorrichtung 10 für mehrere Objektträger 12 weist ein Bodenteil 14 (Fig. 2) auf. Das Bodenteil 14 ist mit Zentrierelementen 16,18,20 verbunden. Im dargestellten Ausführungsbeispiel sind die Zentrierelemente 16,18,20 derart angeordnet, dass vier rechteckförmige Aufnahmebereiche 22 ausgebildet sind, in denen jeweils ein Objektträger 12 angeordnet werden kann. Die Zentrierelemente 16,18,20 weisen zwei einander gegenüberliegende kürzere Seitenwände 16 und zwei zwischen den Seitenwänden 16 angeordnete, ebenfalls einander gegenüberliegende längere Seitenwände 18 auf. Zwischen den Seitenwänden 18 sind im dargestellten Ausführungsbeispiel drei Zwischenwände 20 vorgesehen, die parallel zu den kürzeren Seitenwänden 18 angeordnet sind.

An den Unterseiten 24 der Zentrierelemente 16,18,20 ist das als Membran ausgebildete Bodenteil 14 befestigt. Die Aufnahmebereiche 22 weisen somit als Boden eine flexible Membran auf, auf der jeweils ein Objektträger 12 aufliegt. Es ist somit möglich, in Fig. 2 von unten gegen die Membran zu drücken, um den Objektträger beispielsweise horizontal auszurichten. Ferner kann von unten ein Heizelement an den Objektträger 12 angelegt werden. Auf Grund der Flexibilität der Membran legt sich der Objektträger 12 flach an die Oberfläche eines flachen Heizelementes an. Hierdurch ist ein gleichmäßiger und guter Wärmeübergang zwischen dem Heizelement und dem Objektträger gewährleistet.

Die Zentrierelemente 16,18,20 sind auf ihren Innenseiten 23, d.h. auf den in Richtung der Aufnahmebereiche 22 weisenden Seiten, abgeschrägt. Hierdurch ist die in Fig. 2 nach oben weisende Öffnung der einzelnen Aufnahmebereiche nach oben erweitert. Dies erleichtert das Einlegen der Objektträger 12 in die Aufnahmebereiche 22.

Ein Kopfteil 26 ist derart ausgebildet, dass er in die einzelnen zwischen den Zentrierelementen 16,18,20 ausgebildeten Aufnahmebereiche 22 hineinragt. Hierzu weist das Kopfteil 26 im dargestellten Ausführungsbeispiel vier Ansätze 28 auf, die einen im wesentlichen rechteckigen Querschnitt haben. Die Seitenwände 30 der Ansätze 28 liegen an den Innenwänden der stegförmigen Zentrierelemente 16,20 an. Ebenso liegen in Fig. 2 nicht dargestellte Seitenwände des Ansatzes 28 an den stegförmigen Zentrierelementen 18 an. Auf der dem Basisteil bzw. dem Probenträger 12 zugewandten Unterseite des Kopfteils 26 sind je Aufnahmebereich 22 rahmenförmige Ansätze 32 vorgesehen. Der rahmenförmige Ansatz ist umlaufend. An einer Unterseite 34 des rahmenförmigen Ansatzes 32 ist eine ebenfalls umlaufende Dichtung 36 vorgesehen. Die Dichtung 36 liegt auf einem äußeren Rand des Probenträgers 12 auf und dichtet den Probenträger gegenüber dem Kopfteil 26 ab. Auf Grund des rahmenförmigen Ansatzes 32 ist innerhalb des rahmenförmigen Ansatzes 32 zwischen einer Kopfteilinnenseite 36 und dem Probenträger 12 eine Probenkammer 38 ausgebildet.

Zur Bewegung von in der Probenkammer 38 vorgesehenen Proben sind in dem Kopfteil 26 zwei mit der Probenkammer 38 verbundene Kanäle 40,42 vorgesehen. Der Kanal 40 ist beispielsweise über einen Schlauch 44 mit einer Pumpe 46 verbunden. Entsprechend ist der Kanal 42 über einen Schlauch 48 mit einer Pumpe 50 verbunden. Die beiden Pumpen 46,50 sind über eine vorzugsweise gemeinsame Steuereinheit gesteuert. Von den Pumpen 46,50 wird abwechselnd ein Teil der in der Probenkammer befindlichen Probe in den Kanal 40 bzw. 42 eingesaugt und anschließend wieder in die Probenkammer 38 abgegeben. Hierdurch ist ein Bewegen der Probe in der Probenkammer 38 verwirklicht, so dass sich beispielsweise beim Verwenden der Vorrichtung zur Untersuchung von DNA-Affinitäten zusammengehörende Probenteile leichter verbinden.

Innerhalb des Kopfteils 26 sind ferner zwei Aufnahmekammern 52,54 vorgesehen. Die Aufnahmekammer 52 ist mit dem Kanal 40 und die Aufnahmekammer 54 mit dem Kanal 42 verbunden. Durch die Größe der Aufnahmekammern 52,54 kann die Menge an Probe, die aus der Probenkammer 38 entnommen wird, aufgefangen werden. Es ist ebenso möglich, dass die beiden Pumpen 46,50 unmittelbar mit den Aufnahmekammern 52,54 verbunden und ggf. innerhalb oder auf der Oberseite des Kopfteils 26 angeordnet sind.

Zum Zuführen einer Probe in die Probenkammer 38 ist in dem Kopfteil 26 ein weiterer mit der Probenkammer 38 verbundener Kanal 56 vorgesehen. Durch diesen können, nachdem der Kopfteil 26 bereits auf die Aufnahmevorrichtung 10 aufgesetzt ist, in die bereits dicht verschlossene Probenkammer 38 Proben zugeführt werden. Ebenso kann ein Zuführen der Probe durch einen der beiden Kanäle 40,42, der hierfür ggf. verzweigt ist, erfolgen.

Zur Verbesserung der Bewegung in der Probenkammer 38 können die Kanäle 40,42 verzweigt sein, so dass mehrere Kanäle 40,42 mit der Probenkammer 38 verbunden sind. Ferner ist es möglich, eine Vielzahl von Kanälen 40,42 je Probenkammer 38 in dem Kopfteil 26 vorzusehen. Vorzugsweise ist hierbei die Hälfte der Kanäle mit derselben Pumpe verbunden.

Auf der dem Kopfteil 26 gegenüberliegenden Seite der Aufnahmevorrichtung 10 ist ein Fußteil 58 vorgesehen. Das Fußteil 58 weist eine ebene beheizbare Platte 60 auf. Die beheizbare Platte 60 ist vorzugsweise rechteckförmig. Die Außenabmessungen der beheizbaren Platte sind vorzugsweise geringfügig größer als die Außenabmessungen des Basisteils 12. Bei der beheizbaren Platte 60 handelt es sich vorzugsweise um eine Metallplatte oder eine andere wärmeleitfähige Platte.

In Fig. 2 unterhalb der beheizbaren Platte ist ein thermoelektrischer Kühler 62 als Heizelement vorgesehen. Dieser kann über eine entsprechende Steuerung zum Beheizen oder Kühlen der Platte 60 eingesetzt werden.

Mit dem Kühler 62 ist eine Aufnahmeplatte 64 verbunden. Die Aufnahmeplatte 64 weist vorzugsweise ebenfalls einen rechteckigen Querschnitt auf. Die Außenabmessungen der Platte 64 sind geringfügig kleiner als diejenigen des Basisteils 12. In der Mitte der Platte 64 ist ein kugelförmiger Ansatz 66 vorgesehen, der als sphärische Lagerung dient. Der kugelförmige Ansatz 66 ist in einer Kugelschale 68 gelagert. Hierdurch ist eine Bewegung des gesamten Fußteils 58 um die beiden in Fig. 2 horizontalen Achsen möglich.

Zusätzlich sind mit der Platte 64 Kühlrippen 70 verbunden. Die Kühlrippen 70 dienen dazu, beispielsweise nach einem Heizvorgang, ein schnelleres Abkühlen der in der Probenkammer 38 befindlichen Probenflüssigkeit zu ermöglichen.

Die Kugelschale 68 ist von einem mittig angeordneten stabförmigen Fußteil 72 getragen. Um das Fußteil 72 ist eine Spiralfeder 74 angeordnet, die sich einerseits an der Unterseite der Kugelschale 68 und andererseits in einem ebenfalls stabförmigen Widerlager 76 abstützt. Mit Hilfe der Feder 74 können in Fig. 2 vertikale Stöße gedämpft werden.

Um die Probenkammer 38 zu verschließen und zu öffnen, ist das Fußteil 58 in Richtung eines Pfeils 78 bewegbar. Zusätzlich oder anstelle der Bewegbarkeit des Fußteils 58 in Richtung des Pfeils 78 kann das Kopfteil 26 in Fig. 2 vertikal, d.h. ebenfalls in Richtung des Pfeils 78, bewegbar ausgebildet sein.

Beispielsweise kann das Kopfteil 26 in einer nicht dargestellten Haltevorrichtung gehalten sein. Die Haltevorrichtung kann in Fig. 2 vertikal bewegt werden. Durch die Vertikalbewegung der Haltevorrichtung zusammen mit dem Kopfteil 26 ist ein automatisches Absenken des Kopfteils 26 in die Aufnahmebereiche 22 der Aufnahmevorrichtung 10 möglich. Hierbei wird die an den rahmenförmigen Ansätzen 32 vorgesehene Dichtung 36 auf einen Randbereich der Probenträger 12 gedrückt und die Probenkammer 38 ausgebildet. Dies kann durch eine Bewegung des Fußteils 58 in Richtung des Pfeils 78 unterstützt werden. Da die Probenträger 12 auf einer als Bodenteil 14 dienenden elastischen Membran aufliegen, ist ein Beschädigen der Probenträger durch das Absenken des Kopfteils 26 und/oder Anheben des Fußteils 58 vermieden. Ferner dient die elastische Membran 14 dazu, ein dichtes Abschließen zwischen dem Kopfteil 26 und den Probenträgern 12 zu gewährleisten.

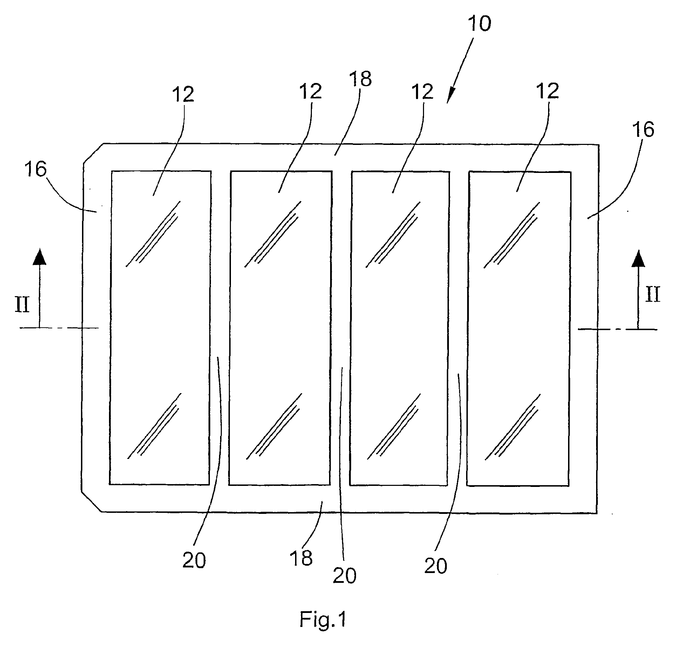

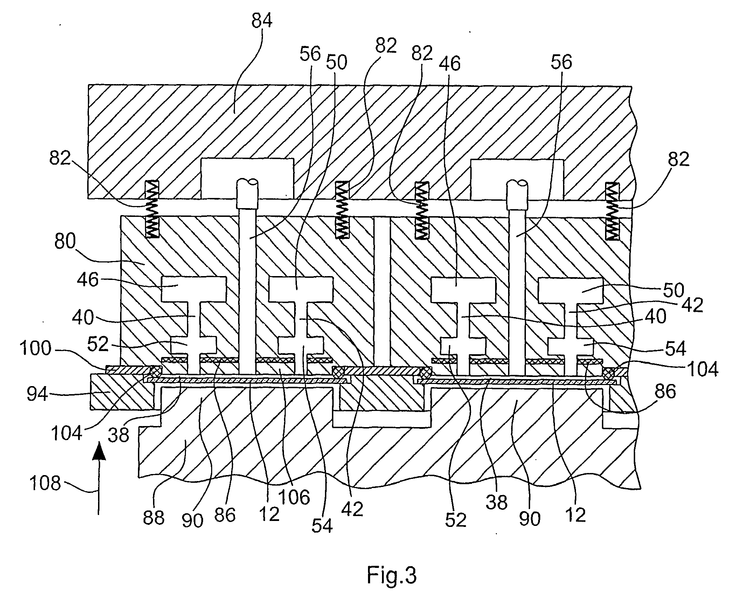

Eine weitere bevorzugte Ausführungsform der erfindungsgemäßen Vorrichtung wird im Folgenden anhand der Fign. 3-5 näher erläutert, wobei ähnliche oder gleiche Bestandteile der Vorrichtung mit denselben Bezugszeichen wie die in den Fign. 1 und 2 verwendeten Bezugszeichen bezeichnet sind.

Der wesentliche Unterschied der in Fig. 3 dargestellten erfindungsgemäßen Vorrichtung gegenüber der in Fig. 2 dargestellten erfindungsgemäßen Vorrichtung besteht darin, dass je Basisteil 12 ein gesondertes Kopfteil 80 vorgesehen ist. Jedes Kopfteil 80 ist über elastische Elemente 82, bei denen es sich vorzugsweise um jeweils vier Federn je Kopfteil 80 handelt, mit einem Trägerteil 84 verbunden. Anstatt als elastische Elemente 82 vier Feder je Kopfteil 80 vorzusehen, ist es auch möglich, je Kopfteil 80 eine Tellerfeder vorzusehen.

Hierdurch können die Kopfteile 80 innerhalb gewisser Grenzen um die beiden in der horizontalen Ebene angeordneten Längsachsen bewegt werden.

Innerhalb des Kopfteils sind entsprechend der in Fig. 2 dargestellten Ausführungsform Kanäle 40,42,56, Aufnahmekammern 52,54 sowie mit dem Kanälen 40,42 verbundene Pumpen 46,50 vorgesehen. Des weiteren ist bei der in Fig. 3 dargestellten Ausführungsform eine Temperiereinrichtung 86 innerhalb des Kopfteils 80 angeordnet. Durch die Temperiereinrichtung 86 kann die in der Probenkammer 38 befindliche Probe erwärmt oder gekühlt werden.

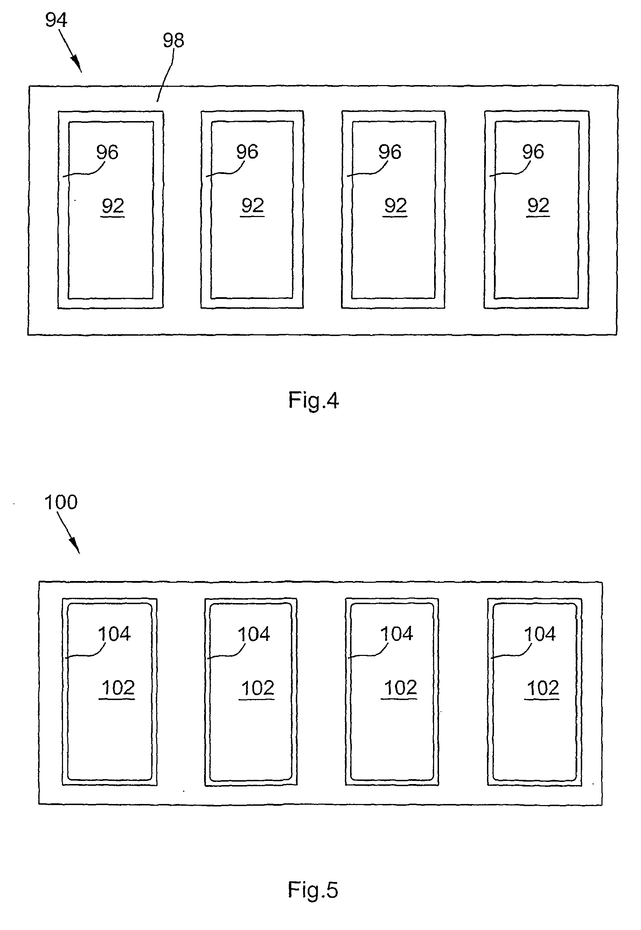

Den Kopfteilen 80 gegenüberliegend ist ein gemeinsames Fußteil 88 vorgesehen. Das stempelartige Fußteil 88 weist im dargestellten Ausführungsbeispiel quaderförmige Ansätze 90 auf, die in rechteckige Ausnehmungen 92 (Fig. 4) einer Aufnahmevorrichtung 94 hineinragen.

Die Aufnahmevorrichtung 94 dient zur Aufnahme der Basisteile bzw. Objektträger 12. Hierzu weist die Aufnahmevorrichtung 94, die zur Aufnahme von vier Objektträgern 12 dient, einen Absatz 96 auf. Auf den Absätzen 96 liegen die Objektträger 12 auf. Durch den die Absätze 96 umgebenden rahmenförmigen Teil 98 der Aufnahmevorrichtung 94 werden die Objektträger 12 in der Ausnehmung 92 zentriert. Selbstverständlich ist es möglich, dass der rahmenförmige Teil 98 der Aufnahmevorrichtung 94 unterbrochen ist. Dies hat den Vorteil, dass der Objektträger 12 leichter eingelegt und entnommen werden kann.

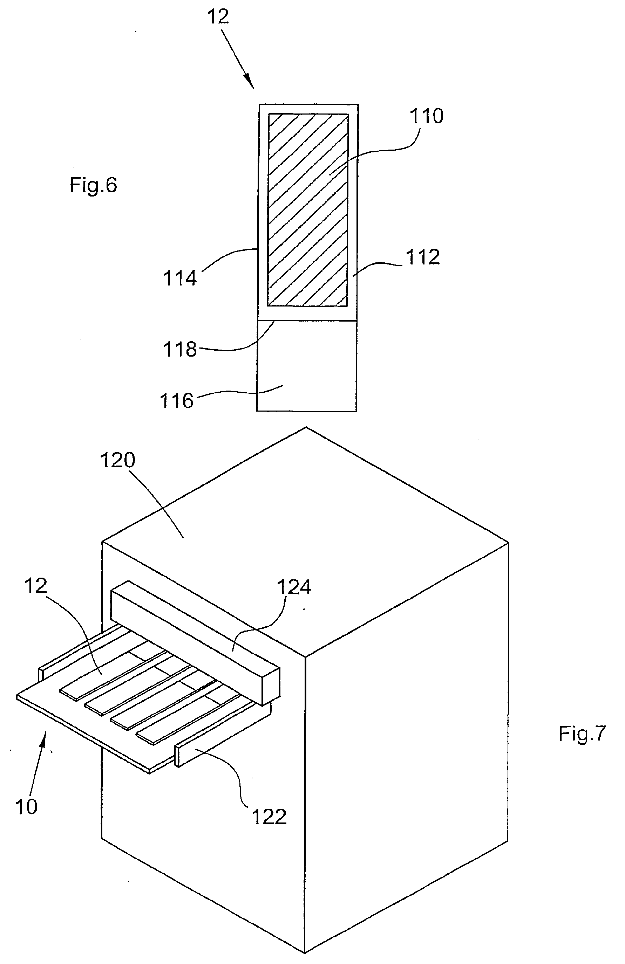

Des weiteren ist zwischen den Kopfteilen 80 und dem Fußteil 88 zusätzlich zu der Aufnahmevorrichtung 94 ein Zwischenteil 100 (Fig. 5) angeordnet. Das Zwischenteil 100 weist ebenfalls vier Ausnehmungen 102 auf, die entsprechend den Ausnehmungen 92 rechteckig sind. Hierbei sind die Ausnehmungen 102 des Zwischenteils 100 kleiner als die Ausnehmungen 92 der Aufnahmevorrichtung 94. Die Ausnehmung 102 weist eine umlaufende Dichtung 104 auf.

Zum Ausbilden der Probenkammer 38 greift ein vorzugsweise quaderförmiger Ansatz 106 des Kopfteils 80 in die Ausnehmung 102 ein. Da der Ansatz 106 eine geringere Höhe aufweist als die Dicke des Zwischenteils 100, ist zwischen der Unterseite des Ansatzes 106 und der Oberseite des Objektträgers 12 die Probenkammer 38 ausgebildet. Hierbei liegt die Dichtung 104 einerseits an der Oberseite des Objektträgers 12 an und dichtet andererseits auch gegenüber dem Ansatz 106 des Kopfteils 80 ab. Um eine dichte Probenkammer 38 zu schaffen, wird das Fußteil 88 in Richtung des Pfeils 108 bewegt. Hierdurch drücken die Ansätze 90 des Fußteils 80 gegen die Unterseite des Objektträgers 12 und drücken diesen an die Dichtung 104.

Die einzelnen Objektträger 12 dienen beispielsweise zur Untersuchung von DNA-Proben. Hierzu ist jeder Objektträger, wie in Fig. 6 dargestellt, in unterschiedliche Bereiche unterteilt. In einem inneren Bereich 80 werden beispielsweise Probentröpfchen aufgebracht, die sich sodann fest mit dem Probenträger 12 verbinden. Der Bereich 80 dient somit als Fläche zur Anordnung eines Arrays. Der Bereich 80 ist von einem vorzugsweise 2,5 mm breiten Rand 82 umgeben. Der Rand 82 dient beispielsweise dazu, dass sämtliche in dem Bereich 80 vorgesehenen Proben einen ausreichenden Abstand zu den Außenkanten 84 des Objektträgers 12 aufweisen. In dem Randbereich 82 liegt bei abgesenktem Kopfteil 26 die Dichtung 36 auf. Ein Bereich 86, der durch die in Fig. 6 dargestellte Linie 88 von dem Rand 82 abgetrennt ist, dient zum Anfassen des Probenträgers 12. In diesem Bereich sind keine Proben angeordnet, so dass der Objektträger 12 in dem Bereich 86 gehandhabt werden kann. Beispielsweise ist der Anfassbereich 86 erforderlich, um den Objektträger 12 in die erfindungsgemäße Aufnahmevorrichtung 10 einlegen zu können.

Die Aufnahmevorrichtung 10 bzw. die Aufnahmevorrichtung 94 zusammen mit dem Zwischenteil 100 können in eine einen Hybridisierungskopf bzw. das Kopfteil 26 aufweisende Untersuchungsvorrichtung 90 (Fig. 7) eingeführt werden. Hierzu weist die Untersuchungsvorrichtung 90 eine schubladenartige Aufnahmeeinrichtung 92 zur Aufnahme der Aufnahmevorrichtung 10 auf. Die Schublade kann entsprechend einer Schublade eines CD-Players o.dgl. ausgebildet sein. Bei geöffneter Schublade 92 wird die die Objektträger 12 tragende Aufnahmevorrichtung 10 bzw. die Aufnahmevorrichtung 94 zusammen mit dem Zwischenteil 100 von oben in die Schublade eingelegt und sodann in die Untersuchungsvorrichtung 90 verfahren.

Innerhalb der Untersuchungsvorrichtung 90 ist das Kopfteil 26 derart angeordnet, dass er, nachdem die Aufnahmevorrichtung 10 in die Untersuchungsvorrichtung 90 verfahren wurde, nach unten auf die Objektträger 12 abgesenkt wird.

Zusätzlich ist oberhalb der Schublade 92 ein Trockenkopf 94 vorgesehen. Der Trockenkopf 94 ist mit einem Gebläse ausgestattet. Nach Abschluß -des Hybridisierungsprozesses wird die Schublade wieder aus der Untersuchungsvorrichtung 90 herausgefahren. Hierbei wird die auf den Probenträgern 12 verbleibende Proben- oder Waschflüssigkeit mit Hilfe des Trockenkopfes 94 entfernt. Der Trockenkopf weist vorzugsweise mehrere Auslaß- und Einlaßöffnungen auf. Von den Einlaßöffnungen wird die vom Trockenkopf abgegebene Luft oder ein anderes Trockenmedium wieder eingesaugt. Hierdurch ist vermieden, dass keine Probenflüssigkeitsbestandteile in die Umgebung gelangen. Hierbei ist die Querschnittsfläche des ansaugenden Einlasses größer als die des Auslasses, so dass stets mehr Luft von dem Trockenkopf 94 eingesaugt als abgegeben wird. Hierdurch ist die Gefahr, dass Bestandteile der Probe in die Umgebung gelangen, weiter verringert. Bei den Ein- und/oder Auslässen kann es sich um schlitzförmige über die Breite des Trockenkopfes verlaufende Öffnungen handeln.

Um ein vollständiges Trocknen der Probenträger 12 zu gewährleisten, kann die Schublade 92 mehrfach hin und her verfahren werden.

Anschließend wird die Aufnahmevorrichtung 10 bzw. 94 ggf. zusammen mit dem Zwischenteil 100 wieder aus der Schublade entnommen.

Zusätzlich ist es möglich, vor dem Trocknen der Probenträger diese zu waschen. Vorzugsweise wird dies mit Hilfe des Kopfteils 26, d.h. bei noch geschlossenen Probenkammern 38, durchgeführt. Der Waschvorgang wird somit innerhalb der Untersuchungsvorrichtung durchgeführt. Hierzu kann eine Waschflüssigkeit über in dem Kopfteil 26 vorgesehene gesonderte Kanäle oder über die Kanäle 40,42 der Probenkammer zu- und aus dieser wieder abgeführt werden. Bevor das Kopfteil innerhalb der Untersuchungsvorrichtung nach oben verfahren wird und somit die Probenkammer 38 nicht mehr dicht ist, wird die in der Probenkammer befindliche Flüssigkeit vorzugsweise weit gehend abgesaugt. Das Absaugen erfolgt vorzugsweise wiederum über die bereits vorhandenen Kanäle 40,42.

## Patentansprüche

1. Untersuchungsvorrichtung zum Untersuchen chemischer und/oder biologischer Proben, mit
einer von einem Basisteil (12) und einem Kopfteil (26,80) gebildeten Probenkammer (38) zur Aufnahme der Probe und
einem Fußteil (58,88) zur Aufnahme des Basisteils (12), wobei das Fußteil (58,88) und das Kopfteil (26,80) zum Verschließen der Probenkammer (38) relativ zueinander bewegbar sind,
**dadurch gekennzeichnet,**
**dass** das Fußteil (58,88) und/oder das Kopfteil (26,80) derart gelagert ist, dass sich beim Verschließen der Probenkammer (38) das Basisteil (12) relativ zum Kopfteil (26,80) ausrichtet.

2. Untersuchungsvorrichtung nach Anspruch 1, **dadurch gekennzeichnet, dass** die Lagerung derart ausgebildet ist, dass sich das Kopfteil (26,80) und das Basisteil (12) planparallel zueinander ausrichten.

3. Untersuchungsvorrichtung nach Anspruch 1 oder 2, **dadurch gekennzeichnet, dass** das kopfteil und/oder das Fußteil um eine Längsachse und/oder eine Querachse schwenkbar gelagert ist.

4. Untersuchungsvorrichtung nach einem der Ansprüche 1-3, **dadurch gekennzeichnet, dass** das Kopfteil- (26,80) und/oder das Fußteil (58,88) schwimmend gelagert ist.

5. Untersuchungsvorrichtung nach einem der Ansprüche 1-4, **dadurch gekennzeichnet, dass** die Lagerung durch mindestens ein elastisches Element (82) erfolgt.

6. Untersuchungsvorrichtung nach Anspruch 5, **dadurch gekennzeichnet, dass** mindestens drei, vorzugsweise mindestens vier elastische Elemente je Kopfteil (80) und/oder je Fußteil vorgesehen sind.

7. Untersuchungsvorrichtung nach einem der Ansprüche 1-3, **dadurch gekennzeichnet, dass** das Fußteil (58,88) und/oder das Kopfteil (26,80) durch eine Ein-Punkt-Lagerung (66,68) gelagert ist.

8. Untersuchungsvorrichtung nach Anspruch 7, **dadurch gekennzeichnet, dass** es sich bei der Ein-Punkt-Lagerung (66,68) um eine sphärische Lagerung handelt.

9. Untersuchungsvorrichtung nach einem der Ansprüche 1-8, **dadurch gekennzeichnet, dass** das Basisteil (12) schwimmend gelagert ist.

10. Untersuchungsvorrichtung nach einem der Ansprüche 1-9, **dadurch gekennzeichnet, dass** die Probenkammer (38) durch einen am Kopfteil (26) vorgesehenen umlaufenden rahmenförmigen Ansatz (32) gebildet ist.

11. Untersuchungsvorrichtung nach Anspruch 10, **dadurch gekennzeichnet, dass** der Ansatz (32) eine Dichtung (36) aufweist.

12. Untersuchungsvorrichtung nach einem der Ansprüche 1-9, **dadurch gekennzeichnet, dass** die Probenkammer (38) durch ein rahmenförmiges Zwischenteil (100) gebildet ist.

13. Untersuchungsvorrichtung nach Anspruch 12, **dadurch gekennzeichnet, dass** das Kopfteil (88) einen vorzugsweise quaderförmigen Ansatz (106) aufweist, der zum Ausbilden der Probenkammer (38) teilweise in die Ausnehmung (102) des Zwischenteils (100) ragt.

14. Untersuchungsvorrichtung nach Anspruch 13, **dadurch gekennzeichnet, dass** zwischen dem Ansatz (106) und dem Zwischenteil (100) eine Dichtung (104) vorgesehen ist.

15. Untersuchungsvorrichtung nach einem der Ansprüche 1-14, **dadurch gekennzeichnet, dass** das Basisteil ein ebener Probenträger (12) ist.

16. Untersuchungsvorrichtung nach einem der Ansprüche 1-15, **dadurch gekennzeichnet, dass** das Kopfteil (26,80) einen Zuführkanal (56) zum Zuführen der Probe in die Probekammer aufweist.

17. Untersuchungsvorrichtung nach einem der Ansprüche 1-15, **gekennzeichnet durch** eine Aufnahmevorrichtung für mehrere Basisteile (12), mit
einem Bodenteil (14) und
mit dem Bodenteil (14) verbundenen Zentrierelementen (16,18,20;98), wobei die Zentrierelemente (16,18,20;98) derart, angeordnet sind, dass mehrere Aufnahmebereiche (22) zur Aufnahme jeweils eines Basisteils (12) ausgebildet sind.

18. Untersuchungsvorrichtung nach Anspruch 17, **dadurch gekennzeichnet, dass** die Zentrierelemente (16,18,20;98) durch einstückige Rahmenteile gebildet sind und das Rahmenteil derart ausgebildet ist, dass jeder Aufnahmebereich (22) von einem umlaufenden Zentrierrahmen (16,18,20;98) umgeben ist.

19. Untersuchungsvorrichtung nach Anspruch 17 oder 18, **dadurch gekennzeichnet, dass** die Zentrierelemente (16,18,20;98) in Richtung des Aufnahmebereichs (22) angefast sind.

20. Untersuchungsvorrichtung nach einem der Ansprüche 17-19, **dadurch gekennzeichnet, dass** das Bodenteil (14) zumindest in den Aufnahmebereichen (22) aus flexiblem Material, insbesondere aus einer wärmedurchlässigen flexiblen Membran besteht.

21. Untersuchungsvorrichtung nach einem der Ansprüche 17-20, **dadurch gekennzeichnet, dass** das Zwischenteil (100) zwischen der Aufnahmevorrichtung (94) und dem Kopfteil (80) angeordnet ist.

22. Untersuchungsvorrichtung nach einem der Ansprüche 17-21, **dadurch** ekennzeichnet, dass die mehreren Basisteile (12) von einem gemeinsamen Fußteil (88) oder einem gemeinsamen Kopfteil (26) aufgenommen sind und je Basisteil (12) ein gesondertes Kopfteil (80) oder ein gesondertes Fußteil (58) vorgesehen ist.

23. Untersuchungsvorrichtung nach einem der Ansprüche 1-22, **dadurch gekennzeichnet, dass** mehrere Kopfteile (80) und/oder Fußteile an einem Trägerteil (84) beweglich gehalten sind.

24. Untersuchungsvorrichtung nach einem der Ansprüche 1-23, **gekennzeichnet durch** eine Bewegungseinrichtung zum Bewegen der Probe in der Probenkammer.

25. Untersuchungsvorrichtung nach Anspruch 24, **dadurch gekennzeichnet, dass** die Bewegungseinrichtung eine Fördereinrichtung (46,50) aufweist, um einen Teil der Probe aus der Probenkammer (38) abzusaugen und der Probenkammer (38) wieder zuzuführen.

26. Untersuchungsvorrichtung nach Anspruch 24 oder 25, **dadurch gekennzeichnet, dass** die Fördereinrichtung mit einer Aufnahmekammer (52,54) zur Aufnahme und anschließenden Abgabe eines Teils der Probe verbunden ist.

27. Untersuchungsvorrichtung nach Anspruch 26, **dadurch gekennzeichnet, dass** mindestens zwei Aufnahmekammern (52,54) vorgesehen sind, die abwechselnd einen Teil der Probe aufnehmen und abgeben.

28. Untersuchungsvorrichtung nach Anspruch 26 oder 27, **dadurch gekennzeichnet, dass** mindestens eine Aufnahmekammer (52,54) im Kopfteil (26) vorgesehen ist.

29. Untersuchungsvorrichtung nach einem der Ansprüche 1-28, **dadurch gekennzeichnet, dass** das Kopfteil (26,80) und/oder das Fußteil (58,88) eine Temperiereinrichtung (60,62,64;86) aufweist.

30. Untersuchungsvorrichtung nach einem der Ansprüche 17-29, **gekennzeichnet durch** eine Positioniereinrichtung (92) zum Positionieren der Aufnahmevorrichtung (10) bezüglich des Fußteils (58).

31. Untersuchungsvorrichtung nach Anspruch 30, **dadurch gekennzeichnet, dass** die Positioniereinrichtung (92) Greifelemente zum Halten der Aufnahmevorrichtung (10) aufweist.

32. Untersuchungsvorrichtung nach Anspruch 30 oder 31, **dadurch gekennzeichnet, dass** mit Hilfe der Positioniereinrichtung (92) die Aufnahmevorrichtung (10) schubladenartig aus der Untersuchungsvorrichtung (90) heraus- und hineintransportierbar ist.

33. Untersuchungsvorricntuhg nach einem der Ansprüche 17-32, **dadurch gekennzeichnet, dass** im Verfahrweg der Aufnahmevorrichtung (10) eine ein Gebläse aufweisende Trockeneinrichtung (94) vorgesehen ist.

34. Untersuchungsvorrichtung nach Anspruch 33, **dadurch gekennzeichnet; dass** die Trockeneinrichtung (94) zusätzlich eine Saugeinrichtung aufweist.

35. Untersuchungsvorrichtung nach Anspruch 34, **dadurch gekennzeichnet, dass** der Querschnitt einer Öffnung der Saugeinrichtung einen größeren Querschnitt als der einer Öffnung des Gebläses aufweist.

## Claims

1. An analyzing device for analyzing chemical and/or biological samples, comprising
a test chamber (38) for receiving the sample, formed by a base part (12) and a head part (26,80), and
a foot part (58,88) for receiving the base part (12), the foot part (58,88) and the head part (26,80) being movable relative to each other for closing the test chamber (38),
**characterized in**
**that** the foot part (58,88) and/or the head part (26,80) are supported such that the base part (12) aligns itself relative to the head part (26,80) upon closing the test chamber (38).

2. The analyzing device according to claim 1, **characterized in that** the bearing is configured such that the head part (26,80) and the base part (12) align relative to each other in a plane-parallel manner.

3. The analyzing device according to claim 1 or 2, **characterized in that** the head part and/or the foot part are supported so as to be pivotable about a longitudinal axis and/or a transverse axis.

4. The analyzing device according to one of claims 1-3, **characterized in that** the head part (26,80) and/or the foot part (58,88) are floatingly supported.

5. The analyzing device according to one of claims 1-4, **characterized in that** the bearing is effected by at least one elastic element (82).

6. The analyzing device according to claim 5, **characterized in that** at least three, preferably at least four elastic elements are provided per head part (80) and/or per foot part.

7. The analyzing device according to one of claims 1-3, **characterized in that** the foot part (58,88) and/or the head part (26,80) are supported by a single-point bearing (66,68).

8. The analyzing device according to claim 7, **characterized in that** the single-point bearing (66,68) is a spherical bearing.

9. The analyzing device according to one of claims 1-8, **characterized in that** the base part (12) is floatingly supported.

10. The analyzing device according to one of claims 1-9, **characterized in that** the test chamber (38) is formed by a circumferential frame-shaped projection (32) provided at the head part (26).

11. The analyzing device according to claim 10, **characterized in that** the projection (32) comprises a seal (36).

12. The analyzing device according to one of claims 1-9, **characterized in that** the test chamber (38) is formed by a frame-shaped intermediate part (100).

13. The analyzing device according to claim 12, **characterized in that** the head part (88) comprises a preferably cuboidal projection (106) partially projecting into the recess (102) of the intermediate part (100) for forming the test chamber (38).

14. The analyzing device according to claim 13, **characterized in that** a seal (104) is provided between the projection (106) and the intermediate part (100).

15. The analyzing device according to one of claims 1-14, **characterized in that** the base part is a flat sample support (12).

16. The analyzing device according to one of claims 1-15, **characterized in that** the head part (26,80) comprises a supply channel (56) for supplying the sample into the test chamber.

17. The analyzing device according to one of claims 1-15, **characterized by** a receiving device for several base parts (12), comprising
a bottom part (14), and
centering elements (16,18,20;98) connected with the bottom part (14), the centering elements (16,18,20;98) being arranged such that several receiving areas (22) are configured to receive one base part (12), respectively.

18. The analyzing device according to claim 17, **characterized in that** the centering elements (16,18,20;98) are formed by integral frame parts and the frame part is formed such that each receiving area (22) is surrounded by a circumferential centering frame (16,18,20;98).

19. The analyzing device according to claim 17 or 18, **characterized in that** the centering elements (16,18,20;98) are chamfered in the direction of the receiving area (22).

20. The analyzing device according to one of claims 17-19, **characterized in that** the bottom portion (14) consists of flexible material, particularly of a diathermic flexible diaphragm, at least in the receiving areas (22).

21. The analyzing device according to one of claims 17-20, **characterized in that** the intermediate part (100) is arranged between the receiving device (94) and the head part (80).

22. The analyzing device according to one of claims 17-21, **characterized in that** the plurality of base parts (12) is received by a common foot part (88) or a common head part (26) and a separate head part (80) or a separate foot part (58) is provided per base part (12).

23. The analyzing device according to one of claims 1-22, **characterized in that** several head parts (80) and/or foot parts are movably held at a carrier portion (84).

24. The analyzing device according to one of claims 1-23, **characterized by** a mover for moving the sample in the test chamber.

25. The analyzing device according to claim 24, **characterized in that** the mover comprises a conveying means (46,50) for sucking off a part of the sample from the test chamber (38) and supply it to the test chamber (38) again.

26. The analyzing device according to claim 24 or 25, **characterized in that** the conveying means is connected with a receiving chamber (52,54) for receiving and subsequently delivering a part of the sample.

27. The analyzing device according to claim 26, **characterized in that** at least two receiving chambers (52,54) are provided that alternately receive and deliver a part of the sample.

28. The analyzing device according to claim 26 or 27, **characterized in that** at least one receiving chamber (52,54) is provided in the head part (26).

29. The analyzing device according to one of claims 1-28, **characterized in that** the head part (26,80) and/or the foot part (58,88) comprise a tempering means (60,62,64;86).

30. The analyzing device according to one of claims 17-29, **characterized by** a positioning means (92) for positioning the receiving device (10) with respect to the foot part (58).

31. The analyzing device according to claim 30, **characterized in that** the positioning means (92) comprises gripping elements for holding the receiving device (10).

32. The analyzing device according to claim 30 or 31, **characterized in that** the receiving device (10) is adapted to be transported into and out of the analyzing device (90) by means of the positioning means (92) in a drawer-like manner.

33. The analyzing device according to one of claims 17-32, **characterized in that** a drying means (94) comprising a fan is provided in the travel path of the receiving device (10).

34. The analyzing device according to claim 33, **characterized in that** the drying means (94) additionally comprises a sucking means.

35. The analyzing device according to claim 34, **characterized in that** the cross-section of an opening of the sucking means has a larger cross-section than that of an opening of the fan.

## Revendications

1. Dispositif d'analyse destiné à analyser des échantillons chimiques et/ou biologiques, comportant
une chambre d'échantillons (38) formée d'un élément de base (12) et d'un élément de tête (26, 80) et destinée à recevoir les échantillons, et
un élément de pied (58, 88) destiné à recevoir l'élément de base (12), l'élément de pied (58, 88) et l'élément de tête (26, 80), étant mobiles l'un par rapport à l'autre pour fermer la chambre d'échantillons (38),
**caractérisé en ce que** l'élément de pied (58, 88) et/ou l'élément de tête (26, 80) sont positionnés de façon telle que lors de la fermeture de la chambre d'échantillons (38), l'élément de base (12) s'aligne par rapport à l'élément de tête (26, 80).

2. Dispositif d'analyse selon la revendication 1, **caractérisé en ce que** le positionnement est exécuté de façon telle que l'élément de tête (26, 80) et l'élément de base (12) s'alignent l'un par rapport à l'autre de façon plan-parallèle.

3. Dispositif d'analyse selon la revendication 1 ou 2, **caractérisé en ce que** l'élément de tête et/ou l'élément de pied sont positionnés de façon à pivoter autour d'un axe longitudinal et/ou d'un axe transversal.

4. Dispositif d'analyse selon l'une des revendications 1 à 3, **caractérisé en ce que** l'élément de tête (26, 80) et/ou l'élément de pied (58, 88) est/sont positionnés de façon flottante.

5. Dispositif d'analyse selon l'une des revendications 1 à 4, **caractérisé en ce que** le positionnement se fait par au moins un élément élastique (82).

6. Dispositif d'analyse selon la revendication 5, **caractérisé en ce qu'**au moins trois, de préférence au moins quatre, éléments élastiques sont prévus par élément de tête (80) et/ou par élément de pied.

7. Dispositif d'analyse selon l'une des revendications 1 à 3, **caractérisé en ce que** l'élément de pied (58, 88) et/ou l'élément de tête (26, 80) sont positionnés par un positionnement à un point (66, 68).

8. Dispositif d'analyse selon la revendication 7, **caractérisé en ce qu'**il s'agit, pour le positionnement à un point (66, 68), d'un palier sphérique.

9. Dispositif d'analyse selon l'une des revendications 1 à 8, **caractérisé en ce que** l'élément de base (12) est positionné de façon flottante.

10. Dispositif d'analyse selon l'une des revendications 1 à 9, **caractérisé en ce que** la chambre d'échantillons (38) est formée par un prolongement (32) en forme de cadre périphérique prévu au niveau de l'élément de tête (26).

11. Dispositif d'analyse selon la revendication 10, **caractérisé en ce que** le prolongement (32) présente une garniture d'étanchéité (36).

12. Dispositif d'analyse selon l'une des revendications 1 à 9, **caractérisé en ce que** la chambre d'échantillons (38) est formée par un élément intermédiaire en forme de cadre (100).

13. Dispositif d'analyse selon la revendication 12, **caractérisé en ce que** l'élément de tête (80) présente un prolongement (106), de préférence de forme carrée, qui, pour former la chambre d'échantillons (38), fait saillie partiellement dans l'évidement (102) de l'élément intermédiaire (100).

14. Dispositif d'analyse selon la revendication 13, **caractérisé en ce qu'**entre le prolongement (106) et l'élément intermédiaire (100) est prévue une garniture d'étanchéité (104).

15. Dispositif d'analyse selon l'une des revendications 1 à 14, **caractérisé en ce que** l'élément de base est un porte-échantillons plan (12).

16. Dispositif d'analyse selon l'une des revendications 1 à 15, **caractérisé en ce que** l'élément de tête (26, 80) présente un canal d'amenée (56) destiné à amener l'échantillon dans la chambre d'échantillons.

17. Dispositif d'analyse selon l'une des revendications 1 à 15, **caractérisé par** un dispositif de réception de plusieurs éléments de base (12) comportant
un élément de fond (14) et
des éléments de centrage (16, 18, 20 ; 98) reliés à l'élément de fond (14), les éléments de centrage (16, 18, 20 ; 98) étant disposés de façon à former plusieurs zones de réception (22) destinées à recevoir chacune un élément de base (12).

18. Dispositif d'analyse selon la revendication 17, **caractérisé en ce que** les éléments de centrage (16, 18, 20 ; 98) sont formés par des éléments de cadre monoblocs et que l'élément de cadre est réalisé de façon telle que chaque zone de réception (22) est entourée d'un cadre de centrage périphérique (16, 18, 20 ; 98).

19. Dispositif d'analyse selon la revendication 17 ou 18, **caractérisé en ce que** les éléments de centrage (16, 18, 20 ; 98) sont biseautés dans la direction de la zone de réception (22).

20. Dispositif d'analyse selon l'une des revendications 17 à 19, **caractérisé en ce que** l'élément de fond (14) se compose, au moins dans les zones de réception (22) d'un matériau flexible, en particulier d'une membrane flexible laissant passer la chaleur.

21. Dispositif d'analyse selon l'une des revendications 17 à 20, **caractérisé en ce que** l'élément intermédiaire (100) est disposé entre le dispositif de réception (94) et l'élément de tête (80).

22. Dispositif d'analyse selon l'une des revendications 17 à 21, **caractérisé en ce que** plusieurs éléments de base (12) sont positionnés par un élément de pied (88) commun ou un élément de tête (26) commun et **en ce que** l'on prévoit, par élément de base (12), un élément de tête séparé (80) ou un élément de pied séparé (58).

23. Dispositif d'analyse selon l'une des revendications 1 à 22, **caractérisé en ce que** plusieurs éléments de tête (80) et/ou éléments de pied sont retenus de façon mobile au niveau d'un élément de support (84).

24. Dispositif d'analyse selon l'une des revendications 1 à 23, **caractérisé par** un dispositif de déplacement destiné à déplacer l'échantillon dans la chambre d'échantillons.

25. Dispositif d'analyse selon la revendication 24, **caractérisé en ce que** le dispositif de déplacement présente un mécanisme de transport (46, 50) pour aspirer une partie de l'échantillon hors de la chambre d'échantillons (38) et le ramener vers la chambre d'échantillons (38).

26. Dispositif d'analyse selon la revendication 24 ou 25, **caractérisé en ce que** le mécanisme de transport est relié à une chambre de réception (52, 54) destinée à recevoir puis à délivrer une partie de l'échantillon.

27. Dispositif d'analyse selon la revendication 26, **caractérisé en ce que** sont prévues au moins deux chambres de réception (52, 54), qui reçoivent et délivrent en alternance une partie de l'échantillon.

28. Dispositif d'analyse selon la revendication 26 ou 27, **caractérisé en ce qu'**au moins une chambre de réception (52, 54) est prévue dans l'élément de tête (26).

29. Dispositif d'analyse selon l'une des revendications 1 à 28, **caractérisé en ce que** l'élément de tête (26, 80) et/ou l'élément de pied (58, 88) présente(nt) un dispositif d'équilibrage de la température (60, 62, 64 ; 86).

30. Dispositif d'analyse selon l'une des revendications 17 à 29, **caractérisé par** un dispositif de positionnement (92) destiné à positionner le dispositif de réception (10) par rapport à l'élément de pied (58).

31. Dispositif d'analyse selon la revendication 30, **caractérisé en ce que** le dispositif de positionnement (92) présente des éléments de préhension pour retenir le dispositif de réception (10).

32. Dispositif d'analyse selon la revendication 30 ou 31, **caractérisé en ce que**, au moyen du dispositif de positionnement (92), on peut transporter le dispositif de réception (10) hors du dispositif d'analyse (90) et vers l'intérieur de celui-ci à la façon d'un tiroir.

33. Dispositif d'analyse selon l'une des revendications 17 à 32, **caractérisé en ce que**, dans la trajectoire de déplacement du dispositif de réception (10), est prévu un dispositif de séchage (94) comportant une soufflante.

34. Dispositif d'analyse selon la revendication 33, **caractérisé en ce que** le dispositif de séchage (94) comporte en outre un dispositif d'aspiration.

35. Dispositif d'analyse selon la revendication 34, **caractérisé en ce que** la section transversale d'une ouverture du dispositif d'aspiration est supérieure à celle d'une ouverture de la soufflante.
